# EUROPEAN PATENT APPLICATION

(11) **EP 3 644 297 A2**
(43) Date of publication of application: **29.04.2020**
(21) Application number: 19205090.4
(22) Date of filing: 24.10.2019
(51) Int. Cl.: G08G 1/16

(54) **METHOD AND APPARATUS FOR CONTROLLING AUTONOMOUS DRIVING OF VEHICLE AND STORAGE MEDIUM**

(30) Priority: 26.10.2018 CN 201811260888
(71) Applicant: Baidu Online Network Technology (Beijing) Co., Ltd., Beijing 100085 (CN)
(72) Inventor: TAO, Ji, Haidian District, Beijing 100085 (CN); HU, Xing, Haidian District, Beijing 100085 (CN); ZHANG, Yaling, Haidian District, Beijing 100085 (CN)
(74) Representative: Zimmermann, Tankred Klaus

(57) **Abstract**

The embodiments of the present disclosure provide a method (300) and an apparatus for controlling autonomous driving of a vehicle, a device and a storage medium. The method (300) is implemented at a portable electronic device, including: establishing (310) a communication connection with a driving control system of the vehicle; receiving (320) information related to a driving control of the vehicle from an external device of the vehicle, the information including at least one of perceptual information related to an environment where the vehicle is located, a path planning of the vehicle and a behavior prediction of at least one object in the environment; determining (330), based on the received information, a control instruction for a driving behavior of the vehicle; and transmitting (340), via the communication connection, the control instruction to the driving control system of the vehicle for executing the control instruction.

## Description

### FIELD

The present disclosure relates to an autonomous driving technology, more particularly to a method and an apparatus for controlling autonomous driving of a vehicle realized in a portable electronic device, and a computer-readable storage medium.

### BACKGROUND

Recently, the autonomous driving (unmanned driving) technology arises gradually and the autonomous driving ability of vehicle is increasingly expected. The functionalities of autonomous driving mainly include environmental perception, vehicle localization, planning and decision, vehicle control and other aspects. The environmental perception refers to recognizing ambient environment and situations of objects therein. The vehicle localization refers to determining position and course information of the vehicle through a positioning equipment and/or a positioning system. The planning and decision refers to reasonably planning a safe driving path for the vehicle to avoid collision between the vehicle and another object, such that the vehicle can drive to a destination from a current position. The vehicle control refers to a driving control of the vehicle. There are corresponding technologies and algorithms to realize respective functions in different aspects of autonomous driving.

### DISCLOSURE

Embodiments of the present disclosure provide a technical solution of realizing a driving control of a vehicle by a portable electronic device.

In a first aspect of the present disclosure, embodiments of the present disclosure provide a method for controlling autonomous driving of a vehicle realized in a portable electronic device, including: establishing a communication connection with a driving control system of the vehicle; receiving information related to a driving control of the vehicle from an external device of the vehicle, the information including at least one of perceptual information related to an environment where the vehicle is located, a path planning of the vehicle and a behavior prediction of at least one object in the environment; determining, based on the received information, a control instruction for a driving behavior of the vehicle; and transmitting, via the communication connection, the control instruction to the driving control system of the vehicle for executing the control instruction.

In an embodiment, establishing the communication connection comprises: determining whether the portable electronic device has an access permission to access the driving control system of the vehicle; and in response to determining that the portable electronic device has the access permission, establishing the communication connection.

In an embodiment, determining whether the portable electronic device has the access permission comprises: acquiring first authentication information related to at least one of the vehicle and a user of the vehicle; verifying the at least one of the vehicle and the user by using the first authentication information; and determining, based on a successful verification of the at least one of the vehicle and the user, that the portable electronic device has the access permission.

In an embodiment, the first authentication information comprises at least one of: a biological characteristic of the user, a password and a user name.

In an embodiment, determining whether the portable electronic device has the access permission comprises: providing second authentication information related to the portable electronic device to an authentication service of at least one of the vehicle and a user of the vehicle; receiving from the authentication service a verification result of the portable electronic device obtained using the second authentication information; and determining, in response to the verification result indicating a successful verification of the portable electronic device, that the portable electronic device has the access permission.

In an embodiment, establishing the communication connection comprises: establishing the communication connection in response to determining that the vehicle is located in a preset geographic area.

In an embodiment, the method further comprises: determining whether the access permission of the portable electronic device to access the driving control system of the vehicle is cancelled; and in response to determining that the access permission is cancelled, stopping determining the control instruction for the driving behavior of the vehicle.

In an embodiment, when the received information comprises the perceptual information, determining the control instruction for the driving behavior of the vehicle comprises: based on the perceptual information, determining the path planning of the vehicle; and based on the determined path planning, generating the control instruction.

In an embodiment, determining the control instruction for the driving behavior of the vehicle comprises: generating the control instruction based on a specified time and a specified geographic area to control the vehicle to drive to the specified geographic area at the specified time.

In an embodiment, the external device comprises at least one of a sensing device in the vicinity of an area where the vehicle is driving and a sensing device integrated on another vehicle in the environment.

In a second aspect of the present disclosure, embodiments of the present disclosure provide an apparatus for controlling autonomous driving of a vehicle realized in a portable electronic device, including: a connection establishing module, configured to establish a communication connection with a driving control system of the vehicle; an information receiving module, configured to receive information related to a driving control of the vehicle from an external device of the vehicle, the information including at least one of perceptual information related to an environment where the vehicle is located, a path planning of the vehicle and a behavior prediction of at least one object in the environment; an instruction determining module, configured to determine, based on the received information, a control instruction for a driving behavior of the vehicle; and an instruction transmitting module, configured to transmit, via the communication connection, the control instruction to the driving control system of the vehicle for executing the control instruction.

In an embodiment, the connection establishing module comprises: a permission determining module, configured to determine whether the portable electronic device has an access permission to access the driving control system of the vehicle; and a first establishing module, configured to, in response to determining that the portable electronic device has the access permission, establish the communication connection.

In an embodiment, when the received information comprises the perceptual information, the instruction determining module comprises: a path planning module, configured to based on the perceptual information, determine the path planning of the vehicle; and a first generating module, configured to, based on the determined path planning, generate the control instruction.

In an embodiment, the instruction determining module comprises: a second generating module, configured to generate the control instruction based on a specified time and a specified geographic area to control the vehicle to drive to the specified geographic area at the specified time.

In a third aspect of the present disclosure, embodiments of the present disclosure provide a computer-readable storage medium having a computer program stored thereon. When the computer program is executed by a processor, the method according to embodiments of the first aspect is performed.

It should be understood that, the above summary of the present disclosure is not intended to describe key or important features of the present disclosure rather than to limit the scope of the present disclosure. Other features in the present disclosure will become apparent in part from the following descriptions.

### BRIEF DESCRIPTION OF THE DRAWINGS

These and other aspects and advantages of embodiments of the present disclosure will become apparent and more readily appreciated from the following descriptions made with reference to the drawings. The same or similar elements and the elements having same or similar functions are denoted by like reference numerals in the drawings.
Fig. 1 is a schematic diagram of an example environment in which the embodiments of the present disclosure are realized;
Fig. 2 is a block diagram of a system in which a portable electronic device controls autonomous driving of a vehicle according to embodiments of the present disclosure;
Fig. 3 is a flow chart of a method for controlling autonomous driving of a vehicle according to embodiments of the present disclosure;
Fig. 4 is a block diagram of an apparatus for controlling autonomous driving of a vehicle according to embodiments of the present disclosure;
Fig. 5 is a schematic diagram of a device according to embodiments of the present disclosure.

### EMBODIMENTS OF THE PRESENT DISCLOSURE

Referring to the following descriptions and drawings, these and other aspects of the embodiments of the present disclosure will be apparent. In these descriptions and drawings, some specific approaches of the embodiments of the present disclosure are provided, so as to show some ways to perform the principle of the embodiments of the present disclosure, however it should be understood that the embodiment of the present disclosure is not limited thereby. Instead, the embodiments of the present disclosure comprise all the variants, modifications and their equivalents within the spirit and scope of the present disclosure as defined by the claims.

It should be further understood that, when used in the specification, terms "comprising" and/or "containing" specify the presence of stated features, operations, elements and/or components, but do not exclude the presence or addition of one or more other features, operations, elements, components and/or groups thereof. Terms "based on" should be understood as "at least partially based on". Reference throughout this specification to "an embodiment," or "this example," means "at least one embodiment". Terms such as "first" and "second" are used herein for describing different or same elements. Other implicit or explicit definitions may be contained in the followings.

As mentioned above, the autonomous driving can be realized by functionalities in environmental perception, vehicle localization, planning and decision, vehicle control and/or other aspects. If the vehicle can support autonomous driving only when the vehicle has all of the functionalities, it means high requirements on hardware and software of the vehicle, because the environmental perception functionality and the vehicle localization functionality require the assistance of a high-precision sensor, while the environmental perception functionality, the planning and decision functionality and the vehicle control functionality require a high computing ability. Due to these requirements, it is difficult to simply and inexpensively upgrade the vehicle without autonomous driving or the vehicle with weak ability in autonomous driving to the vehicle with strong ability in autonomous driving. In addition, it is required for a vehicle manufacturer to carefully consider an integration of autonomous driving to the vehicle, because the vehicle manufacturer is responsible for accidents caused by these functionalities of autonomous driving.

Recently, vehicle infrastructure cooperation based on vehicle-to-everything (V2X) technology is reached and developed, and it is proposed to realize some or all of the functionalities of autonomous driving by a road side unit and to assist or guide autonomous driving of the vehicle by the road side unit. For example, the environmental perception and/or the vehicle localization may be performed by the road side unit, and results of the environmental perception and the vehicle localization are provided to the vehicle for planning and decision and for controlling, such that it is unnecessary for the vehicle to equip an expensive and high-precision sensor. Also, the road side unit may determine planning and decision for the vehicle and control the vehicle based on the results of environmental perception and vehicle localization. Further, in a scene having assistance of the road side unit, the problem of calculation centralization and high delay can be caused, especially in the area having a large of vehicles. In addition, even under the assistance of the road side unit, the vehicle still needs separate design and adaption. For example, the vehicle at least has the communicating ability with the road side unit and/or the calculating ability and the control ability for autonomous driving, which still causes increasing in cost.

According to embodiments of the present disclosure, a technical solution of realizing a driving control of a vehicle by a portable electronic device is provided. In this technical solution, the portable electronic device may control the driving of the vehicle after establishing a communication connection with a driving control system of the vehicle. The portable electronic device receives information related to a driving control of the vehicle, the received information includes at least one of perceptual information related to an environment where the vehicle is located, a path planning of the vehicle and a behavior prediction of at least one object in the environment. The portable electronic device determines a control instruction for a driving behavior of the vehicle based on the received information. The determined control instruction is transmitted to the driving control system of the vehicle via the communication connection for executing. Unlike integrating an autonomous driving module in the vehicle or disposing an equipment at road side, the control functionality of autonomous driving is separately integrated in a standalone portable electronic device, which relieves the problem caused by highly integrating autonomous driving in the vehicle or at road side and realizes flexibility of autonomous driving.

In the following, the embodiments of the present disclosure will be described in detail with reference to the drawings.

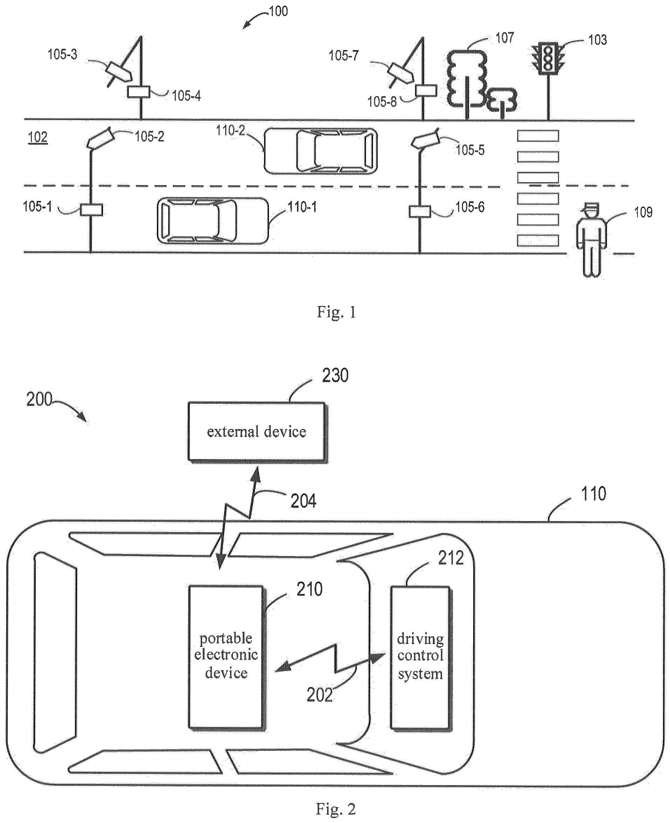

Fig. 1 shows a schematic diagram of an example environment 100 in which the embodiments of the present disclosure are realized. The example environment 100 schematically illustrates some typical objects, including road 102, traffic indication facility 103, plants 107 at two sides of the road, and possible passerby 109.

In an example shown in Fig. 1, one or more vehicles 110-1, 110-2 are driving on the road 102. For ease of description, the one or more vehicles 110-1, 110-2 are collectively called as vehicle 110. The vehicle 110 may be any type of carrier capable of carrying people and/or item and moving through a power system such as an engine, including but not limited to a car, a truck, a bus, an electro car, a motorbike, a limousine, a train or the like. One or more vehicles 110 in the environment 100 may be the vehicle having a certain level of autonomous driving ability or the vehicle without autonomous driving ability.

One or more sensors 105-1 to 105-8 (collectively called as sensor 105) are disposed in respective areas of the environment 100. The sensor 105 is external to the vehicle 110, and configured to monitor the environment 100 where the vehicle 110 is located so as to acquire perceptual information related to the environment 100. The perceptual information may include all kinds of information related to the one or more vehicles 110 and/or other objects in the environment 100. The perceptual information acquired by the sensor 105 disposed in respective area of the environment 100 may also be called as road side perceptual information. In order to monitor the environment 100 thoroughly, the sensor 105 may be disposed in the vicinity of the road 102 where the vehicle is running, and may include one or more kinds of sensors. For example, the sensors 105 may be disposed at two sides of the road 102 at certain intervals, and configured to monitor specific areas of the environment 100. Many kinds of sensors may be disposed in each area. In some examples, besides fixing the sensors 105 at specific positions, moveable sensors 105 such as moveable sensing stations can be disposed in the environment 100.

In some cases, the one or more vehicles 110 may be provided with one or more kinds of sensors (not shown) configured to monitor the environment where the vehicle 110 is located so as to acquire the perceptual information related to the environment 100, including all kinds of information related to one or more objects external to the vehicle 110. The perceptual information acquired by the sensor on the vehicle 110 may also be called as vehicle side perceptual information.

The sensor (sensor 105) disposed external to the vehicle and/or the sensor installed in the vehicle 110 may include but be not limited to an image sensor (such as a camera), a laser radar, a millimeter-wave radar, an infrared sensor, a positioning sensor, a light sensor, a pressure sensor, a temperature sensor, a humidity sensor, an air velocity sensor, a wind direction sensor, an air purity sensor, an accelerometer, a gyroscope or the like. The image sensor may collect image information related to the environment 100. The laser radar and the millimeter-wave radar may collect laser point cloud information related to the environment 100. The infrared sensor may utilize infrared ray to detect an environment situation of the environment 100. The positioning sensor may collect the position information of the object related to the environment 100. The light sensor may collect a measurement value indicating a light intensity of the environment 100. The pressure sensor, the temperature sensor and the humidity sensor may respectively collect measurement values indicating pressure, temperature and humidity in the environment 100. The air velocity sensor and the wind direction sensor may respectively collect measurement values indicating wind speed and wind direction in the environment 100. The air purity sensor may collect indices related to air quality of the environment 100, such as oxygen concentration, concentrations of carbon dioxide, dust concentration, pollutant concentration or the like in the air. The accelerometer may collect information related to an accelerated velocity of the object. The gyroscope may be configured to detect an angular motion of the object.

Only some examples of the sensors are listed above. According to actual requirements, other kinds of sensors may be used. In some examples, different sensors may be integrated to a certain position or disposed in respective areas in the environment 100, and configured to monitor a specific type of road side perceptual information.

Except the sensor configured to collect perceptual data, some computing devices configured to perform data analysis or data fusion on the perceptual data may be disposed in some areas of the environment 100. In some implementations, the computing devices may be disposed at the far end partially or entirely, such as a remote computer, a server or the like.

It should be understood that, Fig. 1 merely indicates an example environment in which the vehicle is driving. Except for driving on an outdoor road, the vehicle may be driving in a tunnel, an outdoor parking space, a building interior (an indoor parking space), a community, a campus or other environment. In the environment of outdoor road, the infrastructures and objects shown in Fig. 1 are merely examples. According to actual situations, the objects in different environments may be changed or omitted. In this context, for ease of description, the embodiments of the present disclosure will be described with reference to Fig. 1.

Fig. 2 is a block diagram of a system 200 in which a portable electronic device controls autonomous driving of a vehicle according to embodiments of the present disclosure. In the system 200, the portable electronic device 210 is introduced to be configured to control autonomous driving of the vehicle 110. The portable electronic device 210 provides a control functionality for autonomous driving of the vehicle. Additionally, the portable electronic device 210 may further provide a planning and decision functionality for autonomous driving of the vehicle.

In this present disclosure, the portable electronic device 210 may be a standalone moveable device having communicating and calculating ability. The portable electronic device 210 may be disposed inside the vehicle 110 or attached to the vehicle body, or may be moved out of the vehicle 110. The portable electronic device 210 may be a device designed and encapsulated separately, or may be integrated into another portable device, for example, be integrated into a mobile terminal (such as mobile phone) or another intelligent device of a user. For example, the mobile terminal of the user may provide an application for autonomous driving, which is configured to realize the functionalities of the portable electronic device 210 described herein.

During operation, the portable electronic device 210 establishes a communication connection 202 with the driving control system 212 of the vehicle 110. The portable electronic device 210, configured as a device independent of the vehicle 110, communicates with the vehicle 110, especially with the driving control system 212 of the vehicle 110 to realize the purpose of controlling the vehicle to drive. The driving control system 212 of the vehicle 110 refers to a system integrated into the vehicle 110 and configured to control the vehicle to perform corresponding driving behaviors, including controlling the diversion, drive, actuation or other operations of the vehicle 110 or including controlling behaviors of the turn light, horn, door and window, air conditioner or other components of the vehicle 110. In some embodiments, the driving control system 212 includes a control bus of the vehicle 110, such that the portable electronic device 210 may connect to the control bus of the vehicle 110 communicatively.

The communication connection 202 may be a wired connection or wireless connection. In an example of the wired connection, the portable electronic device 210 may be connected to the driving control system 212 of the vehicle 110 via a connection component such as a wired interface, a cable, a plug or the like. In an example of the wireless connection, the portable electronic device 210 may utilize various wireless communication technologies to establish the wireless communication connection with the vehicle. The wireless communication technology may be such as vehicle-to-everything (V2X) technology, Wi-Fi, Bluetooth, wireless local area network (WLAN), metropolitan area network (MLAN), cellular communication technology or the like. When a near field wireless communication technology is used, the portable electronic device 210 may be in the vicinity of the vehicle 110, for example, inside the vehicle 110 or distant from the vehicle 110 within a preset distance, such that the communication connection 202 can be established.

The establishing of the communication connection 202 may support or activate the control of the portable electronic device 210 on the driving of the vehicle 110. In some embodiments, the portable electronic device 210 may establish the communication connection with the vehicle 110 directly, for example, after the portable electronic device is connected to the driving control system 212 of the vehicle 110 in a wired connection or after a condition of establishing a wireless connection is met.

In other embodiments, the portable electronic device 210 may establish the communication connection 202 with the driving control system 212 successfully only after an authentication is obtained. The portable electronic device 210 may determine whether it has an access permission to access the driving control system 212 and establish the communication connection 202 after determining that it has the access permission, which may avoid unsafe control on the vehicle 110 and/or portable electronic device 210. The determination of the access permission may be performed when the portable electronic device 210 is firstly used in controlling the autonomous driving of the vehicle 110 or every time the portable electronic device 210 is used in controlling the autonomous driving of the vehicle 110.

In some embodiments, the authentication may be performed at the portable electronic device 210. The portable electronic device 210 may perform the authentication on the vehicle 110 and/or the user of the vehicle 110. In detail, the portable electronic device 210 acquires authentication information (hereinafter referred to as first authentication information) of the vehicle 110 and/or the user, and utilizes the authentication information to verify the vehicle 110 and/or the user. The authentication information of the user may be a password and/or username or the like inputted by the user. Alternatively or additionally, the authentication information of the user may be a biological characteristic of the user, for example, one or more of iris, fingerprint, voiceprint, face or the like of human. The authentication information of the vehicle 110 may be specific information for the vehicle 110, for example, one or more of name, password, digital certificate, digital signature, identification or the like. The portable electronic device 210 may utilize various authentication technologies to verify the vehicle 110 and/or the user. If the vehicle 110 and/or the user is verified successfully, the portable electronic device 210 may determine it has the access permission to access the driving control system 212.

In one example, the authentication information of the vehicle 110 and/or the user may be inputted by the user to the portable electronic device 210 or may be extracted by the portable electronic device 210. For example, the portable electronic device 210 may have one or more of an input interface, a feature scanning functionality, an image sensing functionality, a sound sensing functionality or the like, and may be configured to receive information inputted by the user and/or extract corresponding biological characteristic of the user. In one example, the authentication information of the vehicle 110 and/or the user may be provided by another device, for example, may be provided by a remote server or other devices communicatively connected to the portable electronic device 210. In this example, the authentication information of the vehicle 110 and/or the user may be stored in advance in the remote server and/or other devices, or may be provided to the remote server and/or other devices after being acquired in real time by other terminals (such as a mobile terminal of the user) of the vehicle 110 and/or the user. Thus, the other terminal of the vehicle 110 and/or the user, for example, may also have one or more of an input interface, a feature scanning functionality, an image sensing functionality, a sound sensing functionality or the like, and may be configured to receive information inputted by the user and/or extract corresponding biological characteristic of the user.

In some embodiments, except for the portable electronic device 210, other devices may perform the authentication on the vehicle 110 and/or the user of the vehicle 110 and inform the portable electronic device 210 of the authentication result. The portable electronic device 210 may determine whether it has the access permission to access the driving control system 212 of the vehicle 110 based on the authentication result which indicates a successful verification or a failed verification. In this implementation, the other device, for example, may be a remote server or a device capable of realizing the authentication. For example, the authentication device may be provided at the position where the user acquires the portable electronic device 210 or a certain position of the environment 100, and may be configured to realize the authentication on the vehicle 110 and/or the user.

Alternatively or additionally, the vehicle 110 and/or the user of the vehicle 110 needs to perform the authentication on the portable electronic device 210. The portable electronic device 210 may provide the authentication information (hereinafter referred to as first authentication information) related to the portable electronic device 210 for the authentication service of the vehicle 110 and/or the user of the vehicle 110. The authentication information of the user may be a biological characteristic of the user, for example, one or more of iris, fingerprint, voiceprint, face or the like of human. The authentication information of the portable electronic device 210 may be specific information for the portable electronic device 210, for example, one or more of name, password, digital certificate, digital signature, identification or the like. The authentication service may be provided at the remote server responsible for performing the authentication on the vehicle 110 and/or the user, other intelligent accessories (such as car key) of the vehicle 110, the user terminal or other devices, and may be realized in software and/or hardware. For example, the authentication service may be performed by a certain application of the user terminal, which may be convenient for realizing the authentication.

After receiving the authentication information of the portable electronic device 210, the authentication service may utilize the received authentication information to verify the portable electronic device 210 and then provide a verification result to the portable electronic device 210. If the received verification result indicates a successful verification, the portable electronic device 210 may determine that it has the access permission to access the driving control system 212.

The authentication performed by the portable electronic device 210 on the vehicle 110 and/or the user and the authentication performed by the vehicle 110 and/or the user on the portable electronic device 210 has been described above. In some embodiments, if one of the above authentications is successful, the communication connection 202 may be allowed to be established. In other embodiments, in the case that the two-way authentications are successful, the communication connection 202 may be allowed to be established.

In some embodiments, the communication connection 202 between the portable electronic device 210 and the driving control system 212 is allowed to be established in a certain geographic area. In detail, the portable electronic device 210 may determine whether the vehicle 110 is within the preset geographic area (for example, by positioning the vehicle 110 or positioning the portable electronic device 210). After determining that the vehicle 110 is within the preset geographic area, the portable electronic device 210 may determine that the vehicle 110 has the access permission to access the driving control system 212 and further establish the communication connection 202.

In this way, the control functionality for autonomous driving provided by the portable electronic device 210 may be restrained in the specific geographic area, and the restraint may reach the purpose of ensuring safe driving. This, for example, may be applicable to a case in which the autonomous driving of the vehicle is authorized in only a certain geographic area (such as a specific road or a specific area), for example, the portable electronic device 210 needs to acquire information from an external device to determine how to control the autonomous driving of the vehicle (as described below), thus ensuring that the driving control is executed in an area having a reliable data source.

The portable electronic device 210 may be in an inactive state, and may be activated to establish the communication connection 202 in the case that the portable electronic device 210 is determined to have the access permission to access the driving control system 212. For example, the portable electronic device 210 may be activated after the portable electronic device 210 enters into the specific area or the portable electronic device 210 is authenticated successfully.

When the driving of the vehicle 110 is controlled, the portable electronic device 210 receives information related to the driving control of the vehicle 110 and determines a control instruction for a driving behavior of the vehicle 110 based on the received information. A part of or all of the information acquired by the portable electronic device 210 is received from the external device 230 of the vehicle. The portable electronic device 210 thus has the communication connection 204 with the external device 230. Similar to the communication connection 202, the communication connection 204 may be a wired connection or a wireless connection. The communication connection 204 may be established after a one-way authentication or two-way authentications between the external device 230 and the portable electronic device 210 can be successfully performed, or may be established directly. The communication connection 204 may be established before or after introducing the portable electronic device 210 into the vehicle 110.

The received information may include a behavior prediction of at least one object in the environment 100. The behavior prediction may include behavior predictions of one or more objects external to the vehicle 110, for example, one or more of a desired movement trajectory, a desired movement speed, a desired movement direction or the like of the object. Based on the behavior prediction, the portable electronic device 210 may plan a route for the vehicle 110. Alternatively or additionally, the received information may further include a route planning of the vehicle 110. In an embodiment in which the behavior prediction and/or route planning is received, the route planning is performed partially or entirely outside of the portable electronic device 210 or the vehicle. The external device 230 providing the behavior prediction, for example, may be a computing device, another vehicle and/or a remote server or the like disposed in the environment 100.

In some embodiments, alternatively or additionally, the received information may further include perceptual information provided by the external device 230 and related to an environment (for example, environment 100) where the vehicle 110 is located. In this case, the external device 230 may be a sensing device disposed in the vicinity of an area where the vehicle 110 is driving, or a sensing device integrated on another vehicle in the environment 100. In other words, the information may be received from a road side device or another vehicle having a sensing ability. The sensing device may include the road side sensor or a vehicle-mounted sensor described above with reference to Fig. 1.

The received perceptual information may refer to information related to one or more objects in the environment 100, such as information on one or more of the size, the position (for example, the exact position in the earth coordinate system), the speed, the movement direction, the distance to a specific viewpoint of the object, the shape, the direction, the curvature, the gradient, the lane, the traffic sign, the signal lamp of the road. In some embodiments, the perceptual information provided to the portable electronic device 210 may be raw data collected by a sensor. Since there is a large amount of raw data and the raw data is complicate to handle, in other embodiments, the raw data is processed by another device having a data fusion and analysis ability firstly, and the processed result is configured as the perceptual information provided to the portable electronic device 210.

In an embodiment of the present disclosure, since the perceptual information for the driving control is partially or entirely derived from the external device 230, it is unnecessary for the portable electronic device 210 and the vehicle 110 to integrate the complicate, various and expensive sensors for realizing environmental perception, such that the autonomous driving of the vehicle 110 may be realized. In this way, the portable electronic device 210 may realize the planning and decision functionality and the control functionality without performing the environmental perception functionality and the vehicle localization functionality. In addition, the path planning of the vehicle 110 and the behavior prediction of the object can be acquired from the external device 230, such that the requirement on the calculating ability of the portable electronic device 210 is decreased. The portable electronic device 210 realizes the control functionality for autonomous driving, and other devices may realize other functionalities, such as the environmental perception functionality, the vehicle localization functionality and/or the planning and decision functionality.

In some embodiments, if the vehicle 110 has the environmental perception ability and/or the calculating ability, for example, one or more sensors are installed and/or the computing device is equipped, the portable electronic device 210 may also receive additional perceptual information and/or additional behavior prediction from the sensing system of the vehicle 110.

The portable electronic device 210 determines the control instruction for the driving behavior of the vehicle 110 based on the received information. In some embodiments, if the perceptual information is received, the portable electronic device 210 may determine the path planning of the vehicle 110 based on the perceptual information, and generate the control instruction based on the path planning. For example, the portable electronic device 210 may determine existences and positions of surrounding objects based on the perceptual information to plan the driving path. In some embodiments of planning the path, it is unnecessary to predict the behaviors of objects other than the vehicle 110, but the path of the vehicle is directly planned. For example, in a scene of the car park, the surrounding objects of the vehicle 110 may be motionless, such that the vehicle 110 only needs to determine how to park at the appropriate position.

In other embodiments of planning the path, the portable electronic device 210 may firstly determine the behavior prediction of one or more objects external to the vehicle 110 based on the perceptual information and determine the path planning of the vehicle 110 based on the behavior prediction, and then generate the control instruction based on the path planning. The behavior prediction includes a movement trajectory, a desired movement speed, a desired movement direction or the like of the object. The behavior prediction of the object is also useful for controlling the autonomous driving of the vehicle, especially when the surrounding objects have movement. The behavior prediction of another object may ensure that the planned path may avoid collision between the vehicle 110 and another object, such that the vehicle may drive to the destination from the current position.

In some embodiments, if the behavior prediction of the object external to the vehicle 110 is received from the external device 230, the portable electronic device 210 may determine the path planning of the vehicle 110 starting from the behavior prediction, and generate the control instruction based on the path planning. Sometimes, the portable electronic device 210 may directly acquire the path planning of the vehicle 110 from the external device 230.

On the basis of receiving the perceptual information, the behavior prediction and even the path planning, the portable electronic device 210 may determine or know the path planning of the vehicle 110. The portable electronic device 210 may determine the control instruction for the vehicle 110 based on the path planning, such that the vehicle 110 may drive following the planned path according to the control instruction.

In some embodiments, if the perceptual information provided by the external device 230 and/or the vehicle 110 and/or the behavior prediction of the external object is also received besides receiving the path planning, the portable electronic device 210 may continue optimizing the received path planning without considering the perceptual information and/or the behavior prediction or by utilizing the perceptual information and/or the behavior prediction. In some embodiments, if the perceptual information related to the environment is also received besides receiving the behavior prediction, the portable electronic device 210 may continue optimizing the received behavior prediction without considering the perceptual information or by utilizing the perceptual information.

When determining the control instruction, the position of the vehicle 110 may be taken into account. Generally, in order to control the autonomous driving accurately and securely, an exact position of the vehicle 110 is required. In some embodiments, the portable electronic device 210 may further acquire the locating information of the vehicle. The localization of the vehicle 110 may be realized by the vehicle 110, the device external to the vehicle 110 (for example, the positioning equipment disposed in the vicinity of the road), other positioning equipment, or the multi-terminal devices cooperatively.

The portable electronic device 210 may utilize various technologies, algorithms and/or models to realize the planning and decision and determine the control instruction, which are not limited herein. The control instruction for the driving behavior of the vehicle 110, for example, may be the control instruction for a diversion system, a drive system, an actuation system of the vehicle or other components of the vehicle 110, such that the vehicle 110 may drive according to the control instruction. The control instruction, for example, may be an instruction for turning on an engine, turning off the engine, accelerating, decelerating, left steering, right steering, parking, whistling, turning on or off a vehicle light, and/or controlling an air conditioner or any instruction related to the driving of the vehicle 110. The determined control instruction may be an instruction executable by the driving control system 212 of the vehicle 110. The control instruction determined by the portable electronic device 210 may be transmitted to the driving control system 212 via the communication connection 202 for executing, for example, may be transmitted to the control bus of the vehicle 110. Thus, the vehicle 110 may realize the autonomous driving without additional control ability for driving.

In some embodiments, the portable electronic device 210 may determine the control instruction based on specific indications of the user or the vehicle allocation system for the vehicle. For example, the portable electronic device 210 may determine the control instruction based on the specified time and/or the specified geographic area to control the vehicle 110 to drive to the geographic area at the specified time. The specifying of time and/or geographic area may be directly inputted by the user to the portable electronic device 210, or may be provided to other devices (for example, the vehicle 110 or the user terminal) by the user, and then transferred to the portable electronic device 210 through the devices (for example, provided via the communication connection 202, or transferred through a remote server). In some cases, the user may only specify the geographic area, the portable electronic device 210 may control the vehicle 110 to drive to the specified geographic area based on the control instruction.

Several services may be realized by the time and/or geographic area based autonomous driving control. For example, after the user goes away from the vehicle 110, the user may specify the vehicle 110 to park, charge/refuel, fetch express delivery or other tasks by means of the autonomous driving ability provided by the portable electronic device 210, and may specify the vehicle 110 to wait for the user at the specified geographic area and the specified time. In other embodiments, the vehicle 110 may server for several users, such that when one user goes away from the vehicle, the vehicle may wait for another user at the specified geographic area and the specified time. The specified geographic area and the specified time may be specified by the system automatically or may be specified by other users.

The embodiments of realizing the planning and decision of the vehicle and the vehicle control by the portable electronic device 210 are described above. In some embodiments, the autonomous driving control of the portable electronic device 210 may be cancelled. For example, the portable electronic device 210 may determine whether it has the access permission to access the driving control system, if no, the portable electronic device 210 stops determining the control instruction for the driving behavior of the vehicle 110. The access permission of the portable electronic device 210, for example, may be cancelled when the portable electronic device is beyond the specified geographic area, the specified time expires, the user does not pay for enough fees for the autonomous driving control and/or a cancellation instruction is received, etc.

The portable electronic device 210 may be carried by the user to the vehicle 110. In some scenes, the user may buy, rent or get the portable electronic device 210 at a certain position, for example, the portable electronic device 210 may be acquired before entering into the specified geographic area having enough perceptual information to be provided, and the portable electronic device 210 is disposed inside the vehicle or attached to the vehicle body. The driving control functionality of the portable electronic device 210 may be activated or closed after the portable electronic device 210 enters into or exits from the above-mentioned area. The specified geographic area for example may be labeled by setting the exit and entrance, barrier gate or the like (for example, the barrier gate of high-speed road, the exit and entrance of a parking lot or the like).

In some embodiments, as mentioned above, the portable electronic device 210 may include a mobile terminal of a user. The user may acquire the autonomous driving control functionality described herein by payment method or other methods.

According to some embodiments of the present disclosure, the portable electronic device realizes flexible and convenient autonomous driving control of the vehicle. The requirements on hardware and/or software supporting the autonomous driving functionality of the vehicle are decreased, for example, the vehicle may have the autonomous driving functionality in the case that the communication connection can be provided. Therefore, the vehicle without the autonomous driving ability or with limited autonomous driving ability can be upgraded conveniently and uncostly. In addition, the autonomous driving control or possible planning and decision ability may be distributed to respective vehicles from a centralized position at road side, such that the requirement on the calculating ability at the road side is decreased. Since the device realizing the planning and decision functionality and the control functionality is disposed in the vehicle, a delay of communication may be reduced and a reliability of control may be ensured.

On the other hand, since the portable electronic device is not produced and manufactured as a constituent part of the vehicle, and it is unnecessary for the portable electronic device to be connected to the vehicle rigidly, such that it is unnecessary for the portable electronic device to meet authentication rules of the vehicle-mounted device, for example, the authentication on vibration, temperature and humidity, vehicle voltage pulse or the like. If the portable electronic device mainly works within a specified area, an environment adaptation of the portable electronic device only needs to satisfy an environment requirement of this area. For example, when this area is a park lot or a specified area of a city or a high-speed road and the working way of the portable electronic device is a working way of disposing inside the vehicle, only the temperature, humility condition inside the vehicle under a climatic environment of this area needs to be met, which decreases the requirement on the produce and manufacture process of the portable electronic device.

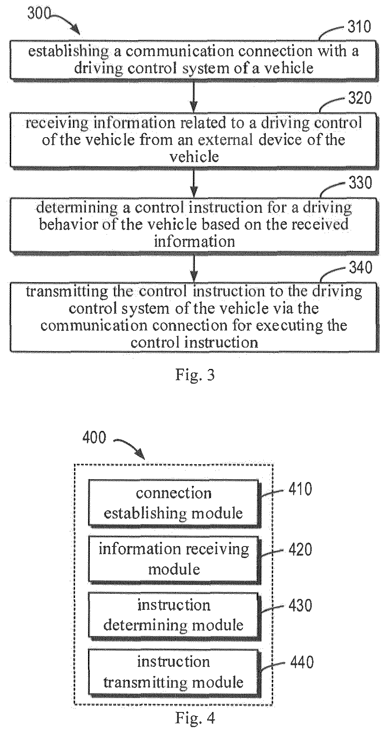

Fig. 3 is a flow chart of a method 300 for controlling autonomous driving of a vehicle according to embodiments of the present disclosure. The method 300 may be implemented by the portable electronic device 210 shown in Fig. 2.

At block 310, the portable electronic device 210 establishes a communication connection with a driving control system of a vehicle. At block 320, the portable electronic device 210 receives information related to a driving control of the vehicle from an external device of the vehicle, the received information may include at least of perceptual information related to an environment where the vehicle is located, a path planning of the vehicle and a behavior prediction of at least one object in the environment. At block 330, the portable electronic device 210 determines a control instruction for a driving behavior of the vehicle based on the received information. At block 340, the portable electronic device 210 transmits the control instruction to the driving control system of the vehicle via the communication connection for executing the control instruction.

In some embodiments, establishing the communication connection includes: determining whether the portable electronic device has an access permission to access the driving control system of the vehicle; and in response to determining that the portable electronic device has the access permission, establishing the communication connection.

In some embodiments, determining whether the portable electronic device has the access permission includes: acquiring first authentication information related to at least one of the vehicle and a user of the vehicle; verifying the at least one of the vehicle and the user by using the first authentication information; and determining, based on a successful verification of the at least one of the vehicle and the user, that the portable electronic device has the access permission.

In some embodiments, the first authentication information includes at least one of: a biological characteristic of the user, a password and a user name.

In some embodiments, determining whether the portable electronic device has the access permission includes: providing second authentication information related to the portable electronic device for an authentication service of at least one of the vehicle and a user of the vehicle; receiving from the authentication service a verification result of the portable electronic device obtained using the second authentication information; and determining, in response to the verification result indicating a successful verification of the portable electronic device, that the portable electronic device has the access permission.

In some embodiments, establishing the communication connection includes: establishing the communication connection in response to determining that the vehicle is located in a preset geographic area.

In some embodiments, the method 300 further includes: determining whether the access permission of the portable electronic device to access the driving control system of the vehicle is cancelled; and in response to determining that the access permission is cancelled, stopping determining the control instruction for the driving behavior of the vehicle.

In some embodiments, when the received information includes the perceptual information, determining the control instruction for the driving behavior of the vehicle includes: based on the perceptual information, determining the path planning of the vehicle; and based on the determined path planning, generating the control instruction.

In some embodiments, determining the control instruction for the driving behavior of the vehicle includes: generating the control instruction based on a specified time and a specified geographic area to control the vehicle to drive to the specified geographic area at the specified time.

In some embodiments, the external device includes at least one of a sensing device in the vicinity of an area where the vehicle is driving and a sensing device integrated on another vehicle in the environment.

Fig. 4 is a block diagram of an apparatus 400 for controlling autonomous driving of a vehicle according to embodiments of the present disclosure. As illustrated in Fig. 4, the apparatus 400 includes a connection establishing module 410 configured to establish a communication connection with a driving control system of the vehicle; an information receiving module 420 configured to receive information related to a driving control of the vehicle from an external device of the vehicle, the information including at least one of perceptual information related to an environment where the vehicle is located, a path planning of the vehicle and a behavior prediction of at least one object in the environment; an instruction determining module 430 configured to determine, based on the received information, a control instruction for a driving behavior of the vehicle and an instruction transmitting module 440 configured to transmit, via the communication connection, the control instruction to the driving control system of the vehicle for executing the control instruction.

In some embodiments, the connection establishing module 410 includes: a permission determining module, configured to determine whether the portable electronic device has an access permission to access the driving control system of the vehicle; and a first establishing module, configured to, in response to determining that the portable electronic device has the access permission, establish the communication connection.

In some embodiments, the permission determining module includes: a first information acquiring module, configured to acquire first authentication information related to at least one of the vehicle and a user of the vehicle; a first verifying module, configured to verify the at least one of the vehicle and the user by using the first authentication information; and a first successful authentication module, configured to determine, based on a successful verification of the at least one of the vehicle and the user, that the portable electronic device has the access permission.

In some embodiments, the first authentication information includes at least one of: a biological characteristic of the user, a password and a user name.

In some embodiments, the connection establishing module 410 includes: a second information acquiring module, configured to provide second authentication information related to the portable electronic device for an authentication service of at least one of the vehicle and a user of the vehicle; a second verifying module, configured to receive from the authentication service a verification result of the portable electronic device obtained using the second authentication information; and a second successful authentication module, configured to determine, in response to the verification result indicating a successful verification of the portable electronic device, that the portable electronic device has the access permission.

In some embodiments, the connection establishing module 410 includes: a second establishing module, configured to establish the communication connection in response to determining that the vehicle is located in a preset geographic area.

In some embodiments, the apparatus 400 further includes: a cancellation determining module, configured to determine whether the access permission of the portable electronic device to access the driving control system of the vehicle is cancelled; and a stopping module, configured to, in response to determining that the access permission is cancelled, stop determining the control instruction for the driving behavior of the vehicle.

In some embodiments, when the received information includes the perceptual information, the instruction determining module 430 includes: a path planning module configured to determine the path planning of the vehicle based on the perceptual information; and a first generating module configured to generate the control instruction based on the determined path planning.

In some embodiments, the instruction determining module 430 further includes: a second generating module, configured to generate the control instruction based on a specified time and a specified geographic area to control the vehicle to drive to the specified geographic area at the specified time.

In some embodiments, the external device includes at least one of a sensing device in the vicinity of an area where the vehicle is driving and a sensing device integrated on another vehicle in the environment.

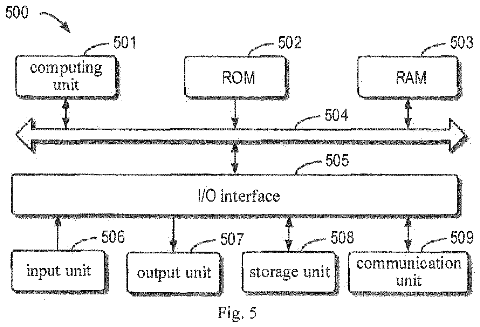

Fig. 5 is a schematic diagram of a device 500 according to embodiments of the present disclosure. The device 500 may be used to implement the portable electronic device 210 shown in Fig. 2. As illustrated in Fig. 5, the device 500 includes a computing unit 501 that may perform various appropriate actions and processing according to computer program instructions stored in a read-only memory (ROM) 502 or computer program instructions loaded into a random access memory (RAM) 503 from a storage unit 508. The RAM 503 may further store various programs and data required for the operation of the device 500. The computing unit 501, the ROM 502 and the RAM 503 are connected to each other via a bus 504. An input/output (I/O) interface 505 is also connected to the bus 504.

A plurality of components in the device 500 are connected to the I/O interface 505, including an input unit 506, such as a keyboard, a mouse or the like; an output unit 507, such as various types of displays, loudspeakers or the like; the storage unit 508, such as a magnetic disk, an optical disk or the like; and a communication unit 509, such as a network card, a modem, a wireless communication transceiver or the like. The communication unit 509 allows the device to exchange information/data with other devices over a computer network such as the Internet and/or various telecommunication networks.

The computing unit 501 may be a general and/or special-purpose processing component having processing and computing ability. Examples of the computing unit 501 include but are not limited to a central processing unit (CPU), a graphic processing unit (GPU), various special-purpose artificial intelligence (AI) computing chips, various computing units each executing machine-learn model algorithms, a digital signal processor (DSP), and any appropriate processors, controllers and microcontrollers. The computing unit 501 performs the various methods (such as method 300) and processes described above. For example, in some embodiments, the method 300 may be implemented as computer software programs, which are tangibly embodied in a machine-readable medium, for example the storage unit 508. In some embodiments, some or all of the computer programs may be loaded and/or installed onto the device 500 through the ROM 502 and/or the communication unit 509. When the computer programs are loaded into the RAM 503 and executed by the computing unit 501, one or more steps of the above-mentioned method 300 may be performed. Alternatively, in other embodiments, the computing unit 501 may be configured to perform the method 300 by any other appropriate means (for example, by means of firmware).

The functions described herein above may be performed, at least in part, by one or more hardware logic components. For example, and without limitation, exemplary types of hardware logic components that may be used include: Field Programmable Gate Array (FPGA), Application Specific Integrated Circuit (ASIC), Application Specific Standard Product (ASSP), System on Chip (SOC), Complex Programmable Logic Device (CPLD), and the like.

Program codes for implementing the method of some embodiments of the present disclosure may be written in any combination of one or more programming languages. These program codes may be provided to a processor or controller of a general purpose computer, special purpose computer or other programmable data processing apparatus such that the program codes, when executed by the processor or controller, enables the functions/operations specified in the flowcharts and/or block diagrams being implemented. The program codes may execute entirely on the machine, partly on the machine, as a stand-alone software package partly on the machine and partly on the remote machine, or entirely on the remote machine or server.

In the context of some embodiments of the present disclosure, the machine readable medium may be a tangible medium that may contain or store programs for use by or in connection with an instruction execution system, apparatus, or device, The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, portable computer disk, hard disk, random access memory (RAM), read only memory (ROM), erasable programmable read only memory (EPROM or flash memory), optical storage device, magnetic storage device, or any suitable combination of the foregoing.

In addition, although operations are described in a specific order, this should not be understood that such operations are required to be performed in the specific order shown or in sequential order, or all illustrated operations should be performed to achieve the desired result. Multitasking and parallel processing may be advantageous in certain circumstances. Likewise, although several specific implementation details are included in the above discussion, these should not be construed as limiting the scope of the present disclosure. Certain features described in the context of separate embodiments may also be implemented in combination in a single implementation. Conversely, various features described in the context of a single implementation may also be implemented in a plurality of implementations, either individually or in any suitable sub-combination.

Although the embodiments of the present disclosure are described in language specific to structural features and/or method logic actions, it should be understood that the subject matter defined in the appended claims is not limited to the specific features or actions described above. Instead, the specific features and actions described above are merely exemplary forms of implementing the claims.

## Claims

1. A method (300) for controlling autonomous driving of a vehicle realized in a portable electronic device, comprising:
establishing (310) a communication connection with a driving control system of the vehicle;
receiving (320) information related to a driving control of the vehicle from an external device of the vehicle, the information comprising at least one of perceptual information related to an environment where the vehicle is located, a path planning of the vehicle and a behavior prediction of at least one object in the environment;
determining (330), based on the received information, a control instruction for a driving behavior of the vehicle; and
transmitting (340), via the communication connection, the control instruction to the driving control system of the vehicle for executing the control instruction.

2. The method (300) of claim 1, wherein, establishing (310) the communication connection comprises:
determining whether the portable electronic device has an access permission to access the driving control system of the vehicle; and
in response to determining that the portable electronic device has the access permission, establishing the communication connection.

3. The method (300) of claim 2, wherein, determining whether the portable electronic device has the access permission comprises:
acquiring first authentication information related to at least one of the vehicle and a user of the vehicle;
verifying the at least one of the vehicle and the user by using the first authentication information; and
determining, based on a successful verification of the at least one of the vehicle and the user, that the portable electronic device has the access permission.

4. The method (300) of claim 3, wherein, the first authentication information comprises at least one of: a biological characteristic of the user, a password and a user name.

5. The method (300) of claim 2, wherein, determining whether the portable electronic device has the access permission comprises:
providing second authentication information related to the portable electronic device to an authentication service of at least one of the vehicle and a user of the vehicle;
receiving from the authentication service a verification result of the portable electronic device obtained using the second authentication information; and
determining, in response to the verification result indicating a successful verification of the portable electronic device, that the portable electronic device has the access permission.

6. The method (300) of claim 1, wherein, establishing (310) the communication connection comprises:
establishing the communication connection in response to determining that the vehicle is located in a preset geographic area.

7. The method (300) of claim 1, further comprising:
determining whether the access permission of the portable electronic device to access the driving control system of the vehicle is cancelled; and
in response to determining that the access permission is cancelled, stopping determining the control instruction for the driving behavior of the vehicle.

8. The method (300) of claim 1, wherein, when the received information comprises the perceptual information, determining the control instruction for the driving behavior of the vehicle comprises:
based on the perceptual information, determining the path planning of the vehicle; and
based on the determined path planning, generating the control instruction.

9. The method (300) of claim 1, wherein, determining (330) the control instruction for the driving behavior of the vehicle comprises:
generating the control instruction based on a specified time and a specified geographic area to control the vehicle to drive to the specified geographic area at the specified time.

10. The method (300) of any of claims 1 to 9, wherein the external device comprises at least one of a sensing device in the vicinity of an area where the vehicle is driving and a sensing device integrated on another vehicle in the environment.

11. An apparatus (400) for controlling autonomous driving of a vehicle (110) realized in a portable electronic device (210) comprising:
a connection establishing module (410), configured to establish a communication connection (202) with a driving control system (212) of the vehicle (110);
an information receiving module (420), configured to receive information related to a driving control of the vehicle (110) from an external device (230) of the vehicle (110), the information comprising at least one of perceptual information related to an environment where the vehicle is located, a path planning of the vehicle (110) and a behavior prediction of at least one object in the environment;
an instruction determining module (430), configured to determine, based on the received information, a control instruction for a driving behavior of the vehicle (110); and
an instruction transmitting module (440), configured to transmit, via the communication connection (202), the control instruction to the driving control system (212) of the vehicle (110) for executing the control instruction.

12. The apparatus (400) of claim 11, wherein, the connection establishing module (410) comprises:
a permission determining module, configured to determine whether the portable electronic device (210) has an access permission to access the driving control system (212) of the vehicle (110); and
a first establishing module, configured to, in response to determining that the portable electronic device (210) has the access permission, establish the communication connection (202).

13. The apparatus (400) of claim 11, wherein, when the received information comprises the perceptual information, the instruction determining module (430) comprises:
a path planning module, configured to, based on the perceptual information, determine the path planning of the vehicle (110); and
a first generating module, configured to, based on the determined path planning, generate the control instruction.

14. The apparatus (400) of claim 11, wherein, the instruction determining module (430) comprises:
a second generating module, configured to generate the control instruction based on a specified time and a specified geographic area to control the vehicle (110) to drive to the specified geographic area at the specified time.

15. A computer-readable storage medium having a computer program stored thereon, wherein, when the computer program is executed by a processor, the processor performs the method (300) according to any of claims 1-10.
